# EUROPEAN PATENT APPLICATION

(11) **EP 3 257 885 A1**
(43) Date of publication of application: **20.12.2017**
(21) Application number: 16749252.9
(22) Date of filing: 09.02.2016
(51) Int. Cl.: C08G 61/08

(54) **METHOD FOR PRODUCING FLUORINE-CONTAINING POLYMER**

(30) Priority: 09.02.2015 JP 2015023412
(71) Applicant: Asahi Glass Company, Limited, Tokyo 100-8405 (JP)
(72) Inventor: TAKAHIRA, Yusuke, Tokyo 100-8405 (JP); WADA, Shinji, Tokyo 100-8405 (JP); JOMUTA, Daisuke, Tokyo 100-8405 (JP)
(74) Representative: Müller-Boré & Partner Patentanwälte PartG mbB
(86) International application number: PCT/JP2016/053870
(87) International publication number: WO 2016/129608

(57) **Abstract**

An object of the present invention is to provide a method for producing a fluorine-containing polymer from a fluorine-containing cycloolefin compound through ring-opening metathesis polymerization. The present invention relates to a method for producing a fluorine-containing polymer. The method includes subjecting at least one kind of fluorine-containing cycloolefin compound selected from the group consisting of a fluorine-containing cycloolefin compound represented by the following formula (41) and a fluorine-containing cycloolefin compound represented by the following formula (42) to ring-opening metathesis polymerization in the presence of a metal-carbene complex compound (10) having an olefin metathesis reaction activity.

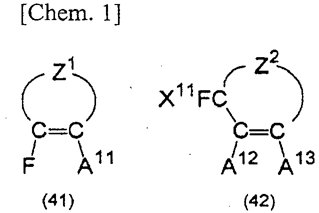

## Description

### Technical Field

The present invention relates to a novel method for producing a fluorine-containing polymer from a fluorine-containing cycloolefin as a starting material.

### Background Art

Industrially useful compounds are known among olefin compounds in which a part or all of hydrogen atoms are substituted with a fluorine atom, that is, fluorine-containing olefins. Examples thereof include a compound having the framework of norbornene, which is a cycloolefin (the compound is hereinafter referred to as a "norbornene compound").

Norbornene compounds are extensively used as a monomer for obtaining polymers by causing the compounds to undergo ring-opening polymerization through metathesis reaction with a metal catalyst. Polymers containing constituent units based on a norbornene compound and products of hydrogenation thereof have an excellent balance in various properties including high glass transition temperature (high heat resistance), low water absorption, and high light transmittance, and is utilized in a variety of fields including the fields of electric/electronic materials, semiconductor materials, optical materials, and the like.

Meanwhile, fluorine-containing norbornene compounds obtained by introducing a fluorine atom into norbornene compounds and polymers thereof are expected to be superior to the fluorine-free norbornene compounds and polymers thereof in chemical durability, weather resistance, and light transmission property (Patent Document 1).

### Prior Art Document

### Patent Document

Patent Document 1: Japanese Patent No. 4752399

### Summary of the Invention

### Problem that the Invention is to Solve

However, it has conventionally been thought that the reaction of an olefin compound containing a fluorine atom is less apt to proceed, and there has been no report on production of a fluorine-atom-containing polymer from any fluorine-atom-containing cycloolefin compound other than norbornene compounds.

Accordingly, an object of the present invention is to provide a method for producing a polymer (fluorine-containing polymer) from a fluorine-atom-containing cycloolefin (fluorine-containing cycloolefin) through ring-opening metathesis polymerization.

### Means for Solving the Problem

As a result of assiduous studies, the present inventors have found that a fluorine-containing cycloolefin undergoes a ring-opening metathesis polymerization (ROMP) reaction in the presence of a metal complex having a ruthenium-, molybdenum-, or tungsten-carbon double bond, thereby giving a fluorine-containing polymer. The present invention has been thus completed.

That is, the present invention relates to the following <1> to <8>.
<1> A method for producing a fluorine-containing polymer comprising subjecting at least one kind of fluorine-containing cycloolefin compound selected from the group consisting of a fluorine-containing cycloolefin compound represented by the following formula (41) and a fluorine-containing cycloolefin compound represented by the following formula (42) to ring-opening metathesis polymerization in the presence of a metal-carbene complex compound (10) having an olefin metathesis reaction activity. 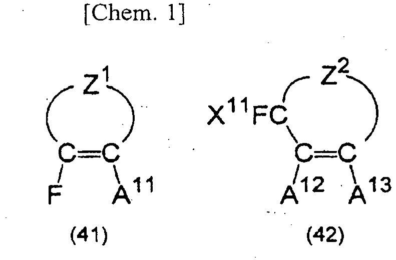
   The symbols in the above formulae have the following meanings.
   Z¹ is an alkylene group having a carbon number of from 2 to 30, a cycloalkylene group having a carbon number of from 4 to 30, an arylene group having a carbon number of from 5 to 30, an alkylene group containing a heteroatom and having a carbon number of from 2 to 30, a cycloalkylene group containing a heteroatom and having a carbon number of from 3 to 30, or an arylene group containing a heteroatom and having a carbon number of from 4 to 30, each of which may have a substituent.
   Z² is an alkylene group having a carbon number of from 1 to 29, a cycloalkylene group having a carbon number of from 3 to 29, an arylene group having a carbon number of from 4 to 29, an alkylene group containing a heteroatom and having a carbon number of from 1 to 29, a cycloalkylene group containing a heteroatom and having a carbon number of from 2 to 29, or an arylene group containing a heteroatom and having a carbon number of from 3 to 29, each of which may have a substituent.
   A¹¹ is a group selected from the group consisting of the following group (i), group (ii), group (iii), and group (iv).
   A¹² and A¹³ are each independently a group selected from the group consisting of the following group (i), group (iia), group (iii), and group (iv).
   X¹¹ is a group selected from the group consisting of the following group (i), group (ii), group (v), and group (vi).
   Group (i): a hydrogen atom.
   Group (ii): a halogen atom.
   Group (iia): a chlorine atom, a bromine atom, or an iodine atom.
   Group (iii): a monovalent hydrocarbon group having a carbon number of from 1 to 20.
   Group (iv): a monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom.
   Group (v): a group selected from the group consisting of an alkyl group having a carbon number of from 1 to 12, an alkoxy group having a carbon number of from 1 to 12, an aryl group having a carbon number of from 5 to 20, an aryloxy group having a carbon number of from 5 to 20, a (per)halogenated alkyl group having a carbon number of from 1 to 12, a (per)halogenated alkoxy group having a carbon number of from 1 to 12, a (per)halogenated aryl group having a carbon number of from 5 to 20, and a (per)halogenated aryloxy group having a carbon number of from 5 to 20.
   Group (vi): the group (v) further containing one or more atoms selected from the group consisting of an oxygen atom, a nitrogen atom, a sulfur atom, a phosphorus atom, and a silicon atom.
<2> The production method according to <1> above, wherein a metal in the metal-carbene complex compound (10) is ruthenium, molybdenum, or tungsten.
<3> The production method according to <1> or <2> above, wherein a metal in the metal-carbene complex compound (10) is ruthenium.
<4> The production method according to <1> or <2> above, wherein a metal in the metal-carbene complex compound (10) is molybdenum or tungsten and the metal-carbene complex compound has an imide ligand and a ligand including two coordinating oxygen atoms, as ligands [L].
<5> The production method according to any one of <1> to <4> above, wherein the fluorine-containing cycloolefin compound represented by the formula (41) is at least one kind of a fluorine-containing cycloolefin compound selected from the group consisting of compounds represented by the following formulae. 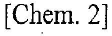 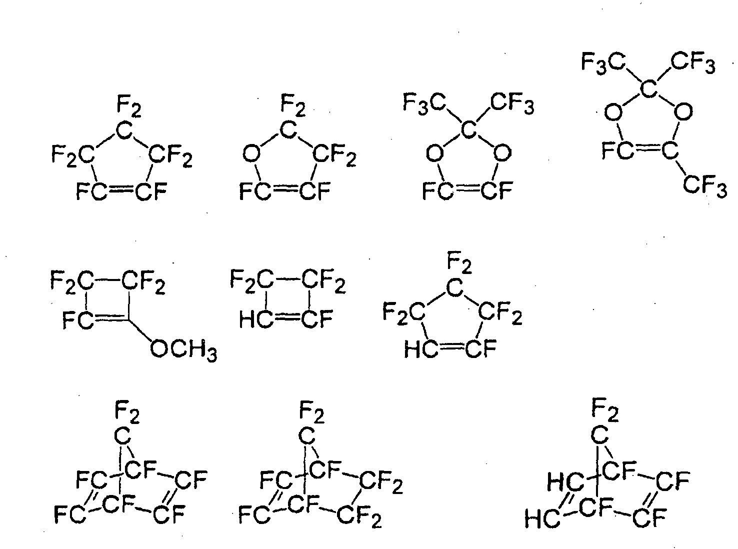
<6> The production method according to any one of <1> to <5> above, wherein the fluorine-containing cycloolefin compound represented by the formula (42) is at least one kind of a fluorine-containing cycloolefin compound selected from compounds represented by the following formulae. 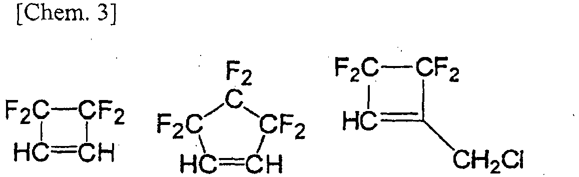
<7> The production method according to any one of <1> to <6> above, wherein a temperature in the polymerization is from 0 to 150°C.
<8> The production method according to any one of <1> to <7> above, wherein no solvent is used.

### Effect of the Invention

According to the method for producing a fluorine-containing polymer of the present invention, a fluorine-containing polymer can be produced through ring-opening metathesis polymerization of at least one of a fluorine-containing cycloolefin compound in which a fluorine atom directly bonds to a carbon atom of a carbon-carbon double bond (C=C) and a fluorine-containing cycloolefin compound in which a fluorine atom bonds to a carbon atom constituting a ring and locating adjacent to a carbon-carbon double bond (C=C) as a starting material.

### Modes for Carrying out the Invention

The present invention is described in detail hereinunder, but the present invention is not limited to the following embodiments. Within a range not overstepping the scope thereof, the present invention may be carried out in any modifications. The present invention relates to ring-opening metathesis polymerization of at least one fluorine-containing cycloolefin compound with of a metal catalyst, and description of general features common to those in conventional techniques may be omitted hereunder.

In this description, "a compound represented by a formula (X)" may be simply referred to as "a compound (X)".

The perhalogenated alkyl group means a group in which all hydrogen atoms of the alkyl group are substituted with halogen atoms. The perhalogenated alkoxy group means a group in which all hydrogen atoms of the alkoxy group are substituted with halogen atoms. The same shall apply to the perhalogenated aryl group and the perhalogenated aryloxy group.

The (per)halogenated alkyl group is used as a generic term including both a halogenated alkyl group and a perhalogenated alkyl group. That is, the group is an alkyl group having one or more halogen atoms. The same shall apply to the (per)halogenated alkoxy group, the (per)halogenated aryl group and the (per)halogenated aryloxy group.

The aryl group means a monovalent group corresponding to a residue derived by removing one hydrogen atom bonding to any one carbon atom in the carbon atoms forming an aromatic ring in an aromatic compound, and is used as a generic term including an aryl group derived from a carbocyclic compound and a heteroaryl group derived from a heterocyclic compound.

The carbon number of the hydrocarbon group means the total number of the carbon atoms contained in the whole of a hydrocarbon group, and in the case where the group does not have a substituent, the carbon number means the number of the carbon atoms forming the hydrocarbon group skeleton, while in the case where the group has a substituent, the carbon number means the sum of the number of the carbon atoms forming the hydrocarbon group skeleton and the number of the carbon atoms in the substituent.

The heteroatom means an atom except for a carbon atom and a hydrogen atom. Preferred are one or more kinds of atoms selected from the group consisting of an oxygen atom, a nitrogenatom, a sulfur atom, a phosphorus atom, a silicon atom, and a halogen atom. More preferred is an oxygen atom or a nitrogen atom.

### <Reaction Mechanism>

The present invention relates to a method for producing a fluorine-containing polymer through the ring-opening metathesis polymerization of a fluorine-containing cycloolefin compound. For example, as shown by the following scheme (a), a fluorine-atom-containing cycloolefin compound is polymerized in the presence of a metal-carbene complex catalyst (10) and the ring-opening metathesis polymerization proceeds. Thus, a fluorine-containing polymer can be obtained.

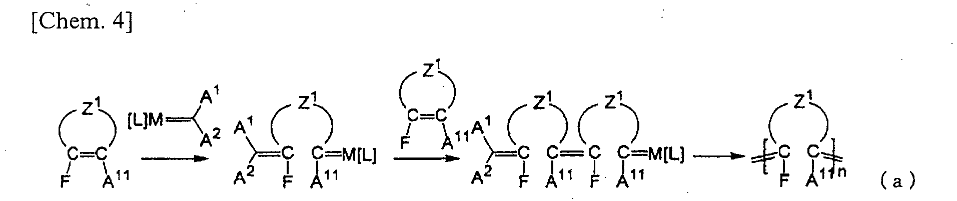

In the scheme (a), Z¹ is an alkylene group having a carbon number of from 2 to 30, a cycloalkylene group having a carbon number of from 4 to 30, an arylene group having a carbon number of from 5 to 30, an alkylene group containing a heteroatom and having a carbon number of from 2 to 30, a cycloalkylene group containing a heteroatom and having a carbon number of from 3 to 30, or an arylene group containing a heteroatom and having a carbon number of from 4 to 30, each of which may have a substituent. A¹¹ is a group selected from the group consisting of a hydrogen atom, a halogen atom, a monovalent hydrocarbon group having a carbon number of from 1 to 20, and a monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom, and n is a positive integer which indicates the number of the repeating units.

[L] is a ligand and M is ruthenium, molybdenum, or tungsten. A¹ and A² are each independently a hydrogen atom, a halogen atom, or a monovalent hydrocarbon group which may contain a heteroatom.

Although scheme (a) shows that one kind of fluorine-containing cycloolefin compound (monomer) is polymerized as a starting material, two or more monomers may be used as starting materials. In this case, a fluorine-containing copolymer is produced.

In the case where of the groups bonding to the carbon-carbon double bond of the monomer as a starting material, two groups not constituting the ring (in scheme (a), the two groups correspond to the fluorine atom and A¹¹) are different groups, the selectivity in the polymerization reaction varies depending on the reactivity of these groups. Furthermore, geometrical isomers (cis-isomer and trans-isomer) are present during the polymerization.

That is, it is thought that at least one of the compound (71) to compound (74) shown below is produced as a reaction intermediate through a reaction between the monomer and the catalyst in the reaction step.

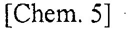

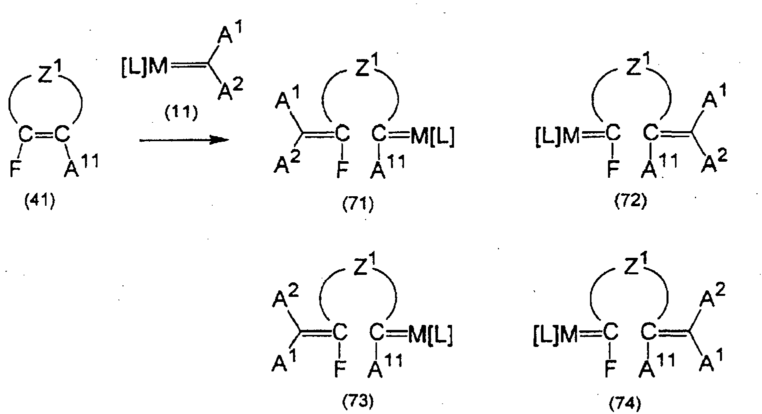

The symbols in the formulae respectively have the same meanings as those shown in the scheme (a).

From the reaction intermediate (71), dimer compounds represented by the following formula (81) and formula (82) are produced. The polymerization then proceeds further, thereby giving a polymer represented by the formula (61).

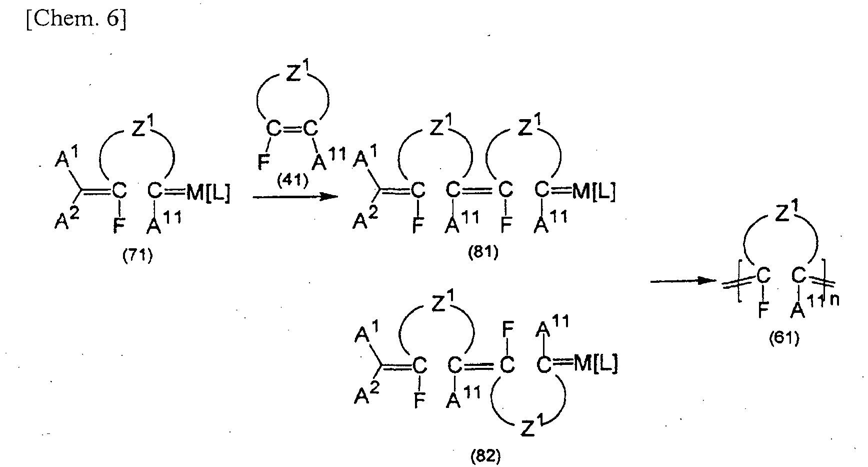

The symbols in the formulae respectively have the same meanings as those shown in the scheme (a).

Although the compound (41) is used as a monomer in the scheme (a), it is thought that in the case of using the compound (42), which will be described later, ring-opening metathesis polymerization proceeds in the same reaction mechanism as in the scheme (a).

That is, in the case of using the compound (42) as a monomer, reaction intermediates represented by the following formula (75) to formula (78) are obtained. For example, the reaction intermediate represented by the formula (75) forms a dimer with the compound (42) as a monomer, and the ring-opening metathesis polymerization then proceeds further, thereby giving a polymer represented by the formula (62).

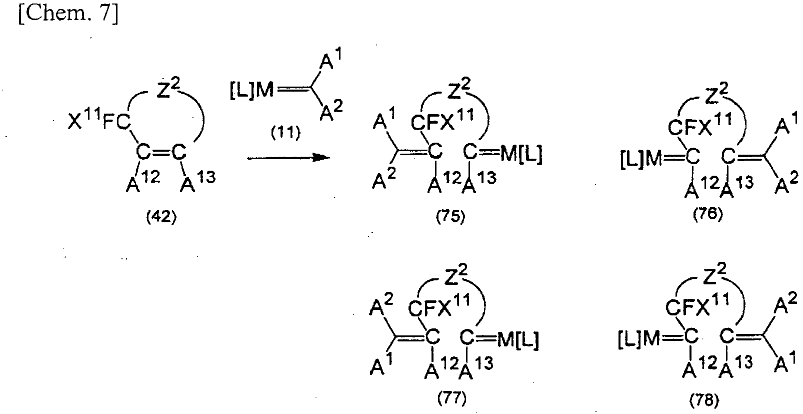

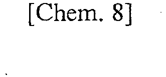

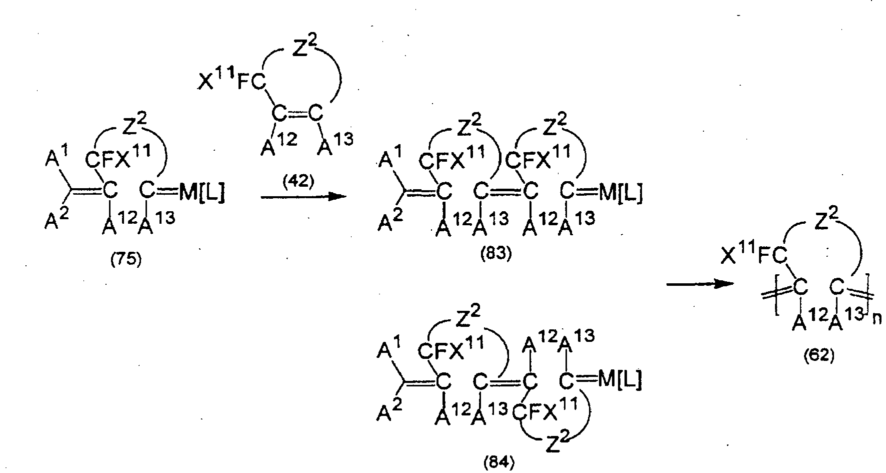

It is thought that in the case where the compound (41) or compound (42) has a high ring strain energy, the reaction is more apt to proceed.

In the case where two or more compounds differing in structure are used as monomers, the polymer obtained through the ring-opening metathesis polymerization is a copolymer.

The ring-opening metathesis polymerization reaction proceeds in the presence of the compound (11) as a complex. The compound (11) is shown as a representative example of the metal-carbene complex compound (10). Examples of the metal-carbene complex compound (10) include a ruthenium-carbene complex, a molybdenum-carbene complex, or a tungsten-carbene complex (hereinafter, the complex is also inclusively referred to as a "metal-carbene complex"). Besides the compound (11), the metal-carbene complex may be the compound (13), compound (14A), compound (14B), compound (14C), compound (14D), compound (15A), compound (15B), compound (15C), compound (15D), compound (17), compound (18A), compound (18B), compound (18C), and compound (18D), which are described below. It is thought that in the case of using any of these complexes, ring-opening metathesis polymerization proceeds in the same reaction mechanism as in the scheme (a) described above. The same applies to the other metal-carbene complexes.

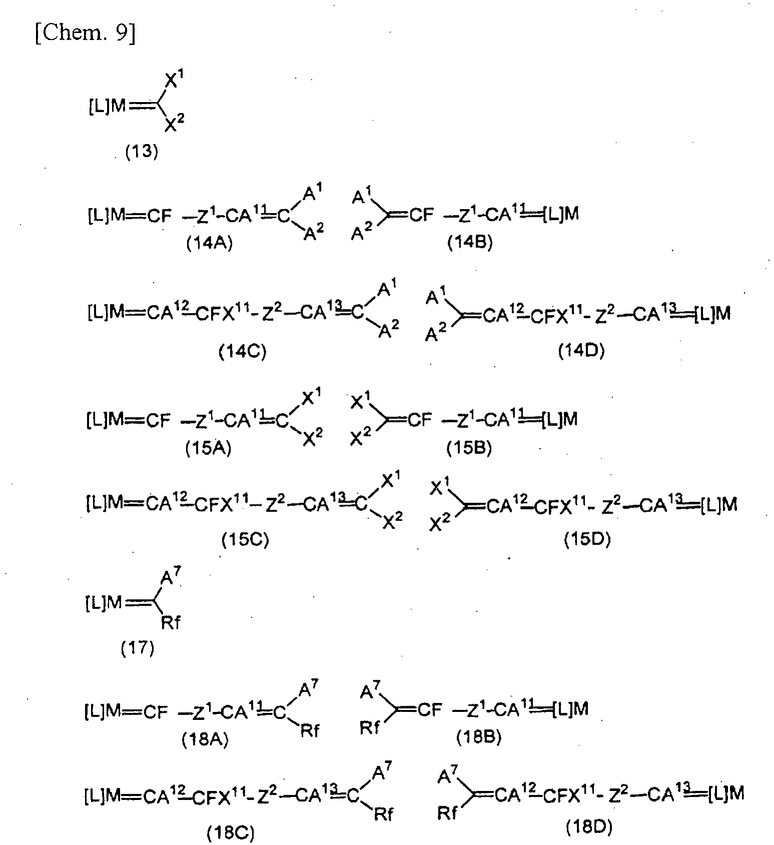

In this description, the symbols in the formulae have the following meanings.

[L] is a ligand.

M is ruthenium, molybdenum, or tungsten.

Z¹ is an alkylene group having a carbon number of from 2 to 30, a cycloalkylene group having a carbon number of from 4 to 30, an arylene group having a carbon number of from 5 to 30, an alkylene group containing a heteroatom and having a carbon number of from 2 to 30, a cycloalkylene group containing a heteroatom and having a carbon number of from 3 to 30, or an arylene group containing a heteroatom and having a carbon number of from 4 to 30, each of which may have a substituent.

Z² is an alkylene group having a carbon number of from 1 to 29, a cycloalkylene group having a carbon number of from 3 to 29, an arylene group having a carbon number of from 4 to 29, an alkylene group containing a heteroatom and having a carbon number of from 1 to 29, a cycloalkylene group containing a heteroatom and having a carbon number of from 2 to 29, or an arylene group containing a heteroatom and having a carbon number of from 3 to 29, each of which may have a substituent.

Rf is a (per)fluoroalkyl group having a carbon number of from 1 to 20, a (per)fluoroalkyl group having a carbon number of from 1 to 20 and having an etheric oxygen atom between a carbon atom and a carbon atom, or a (per)fluoroaryl group having a carbon number of from 5 to 20.

A¹, A², and A¹¹ are each independently a group selected from the group consisting of the following group (i), group (ii), group (iii), and group (iv). A¹ and A² may bond to each other to form a ring. In the case where one of A¹ or A² is a halogen atom, the other is a group selected from the group consisting of group (i), group (iii), and group (iv).

A⁷, A¹², and A¹³ are each independently a group selected from the group consisting of the following group (i), group (iia), group (iii), and group (iv). A⁷ and Rf may bond to each other to form a ring.

X¹, X² , and X¹¹ are each independently a group selected from the group consisting of the following group (i), group (ii), group (v), and group (vi). X¹ and X² may bond to each other to form a ring.
Group (i) to group (vi) respectively have the following meanings.
Group (i): a hydrogen atom.
Group (ii): a halogen atom.
Group (iia): a chlorine atom, a bromine atom, or an iodine atom.
Group (iii): a monovalent hydrocarbon group having a carbon number of from 1 to 20.
Group (iv): a monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom.
Group (v): a group selected from the group consisting of an alkyl group having a carbon number of from 1 to 12, an alkoxy group having a carbon number of from 1 to 12, an aryl group having a carbon number of from 5 to 20, an aryloxy group having a carbon number of from 5 to 20, a (per)halogenated alkyl group having a carbon number of from 1 to 12, a (per)halogenated alkoxy group having a carbon number of from 1 to 12, a (per)halogenated aryl group having a carbon number of from 5 to 20, and a (per)halogenated aryloxy group having a carbon number of from 5 to 20.
Group (vi): the group (v) which further contains one or more atoms selected from the group consisting of an oxygen atom, a nitrogen atom, a sulfur atom, a phosphorus atom, and a silicon atom.

The group (v) is excluded from the group (vi).

### <Metal-carbene Complex Compound (10) having Olefin Metathesis Reaction Activity>

The metal-carbene complex compound (10) having olefin metathesis reaction activity serves as a catalyst in the production method according to the present invention and means both one charged as a reagent and one formed during the reaction (catalytically active species). Here, as the compound (10), known are both one that comes to exhibit catalytic activity through dissociation of some ligands under the reaction condition, and one that exhibits catalytic activity with no dissociation of ligands, and any of these is employable in the present invention with no limitation. In general, ring-opening metathesis polymerization proceeds with repeating cycloolefin coordination, ring opening and dissociation with or from catalyst, and therefore during reaction, it is not always definite how many ligands except cycloolefin could coordinate on the catalyst. Consequently, in this description, [L] does not specifically define the number and the type of ligand. It is preferable that the metal in the metal-carbene complex compound (10) should be ruthenium, molybdenum, or tungsten.

The compound (11) is explained below in detail.

A¹ and A² in the compound (11) are the same as defined above. That is, A¹ and A² in the compound (11) are each independently a hydrogen atom, a halogen atom, a monovalent hydrocarbon group having a carbon number of from 1 to 20, or a monovalent hydrocarbon group having a carbon number of from 1 to 20 and further containing one or more atoms selected from the group consisting of an oxygen atom, a nitrogen atom, a sulfur atom, a phosphorus atom, and a silicon atom. A¹ and A² may bond to each other to form a ring. The case where both A¹ and A² are halogen atoms is excluded from the compound (11).

Examples of the halogen atoms include a fluorine atom, a chlorine atom, a bromine atom, and an iodine atom. A fluorine atom and a chlorine atom are preferred from the viewpoint of the availability.

The monovalent hydrocarbon group having a carbon number of from 1 to 20 is preferably an alkyl group having a carbon number of from 1 to 20 or an aryl group having a carbon number of from 5 to 20, and may be linear or branched. This group may be a divalent hydrocarbon group to form a ring.

Preferred examples of the monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom include alkyl groups having a carbon number of from 1 to 20 and containing the atoms, alkoxy groups having a carbon number of from 1 to 20, aryl groups having a carbon number of from 5 to 20 and containing the atoms, and aryloxy groups having a carbon number of from 5 to 20. The monovalent hydrocarbon group may be linear or branched. The group may be a divalent hydrocarbon group to form a ring. In these preferred groups, a halogen atom may bond to at least a part of the carbon atoms. Namely, the monovalent hydrocarbon group may be, for example, a (per)fluoroalkyl group or a (per)fluoroalkoxy group. These preferred groups each may have an etheric oxygen atom between a carbon atom and a carbon atom. Furthermore, these preferred groups each may have a substituent containing one or more atoms selected from the group consisting of a halogen atom, an oxygen atom, a nitrogen atom, a sulfur atom, a phosphorus atom, and a silicon atom. Examples of the substituent include a hydroxyl group, an amino group, an imino group, a nitrile group, an amido group (a carbonylamino group), a carbamate group (an oxycarbonylamino group), a nitro group, a carboxyl group, an ester group (an acyloxy group or an alkoxycarbonyl group), a thioether group, and a silyl group. These groups may be further substituted with an alkyl group or an aryl group. For example, the amino group (-NH₂) may be a monoalkylamino group (-NHR), a monoarylamino group (-NHAr), a dialkylamino group (-NR₂), or a diarylamino group (-NAr₂). R is an alkyl group having a carbon number of from 1 to 12 or an alkyl group having a carbon number of from 1 to 12 and having an etheric oxygen atom between a carbon atom and a carbon atom, and Ar is an aryl group having a carbon number of from 5 to 12.

Preferred examples of the compound (11) having a combination of these A₁ and A₂ include one represented by the following formula, from the viewpoint of the availability thereof. In the following formulae, Cy means a cyclohexyl group.

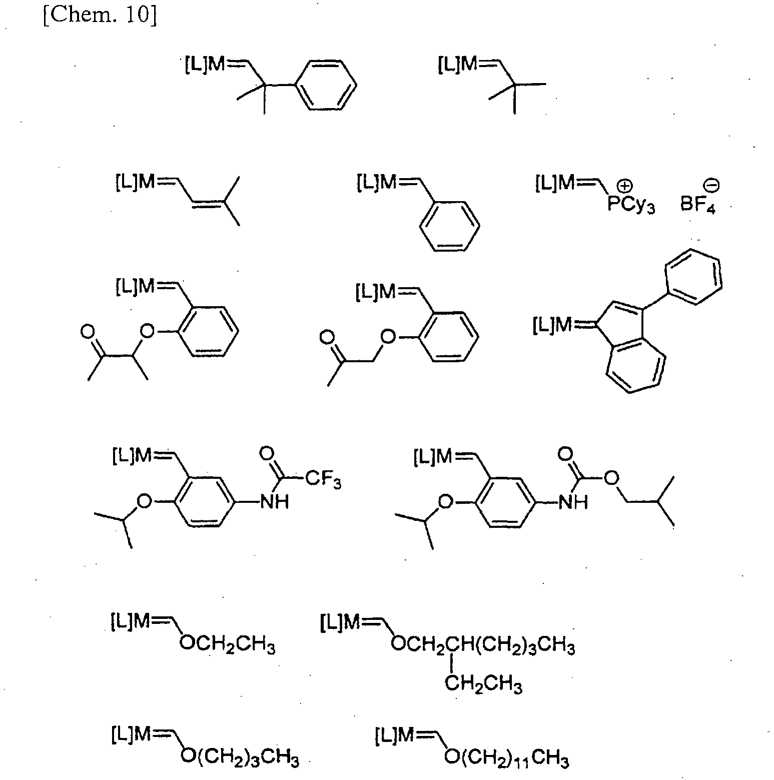

In the present invention, it is preferable that the metal in the metal-carbene complex is ruthenium.

Specifically, in the case where M is ruthenium in the compound (11), it can be represented by the following formula (11-A). The ligand [L] in the formula (11) is represented by L¹, L², L³, Z¹¹, and Z¹² in the formula (11-A). The positions of L¹, L², L³, Z¹¹, and Z¹² are not specifically defined, and these may be alternated to each other in the formula (11-A). That is, for example, Z¹¹ and Z¹² may be at the trans-position or at the cis-position.

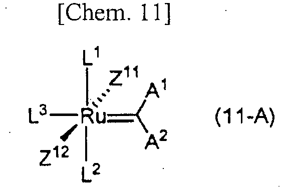

In the formula (11-A), L¹, L² and L³ are each independently a ligand that has a neutral charge when dissociated from the metal center (a neutral electron-donating ligand). Concretely, there are mentioned a carbonyl group, amines, imines, pyridines, ethers, nitriles, esters, phosphines, thioethers, sulfoxides, sulfones, aromatic compounds, olefins, isocyanides, thiocyanates, heteroatom-containing carbene compounds, and the like. Of those, preferred are phosphines, pyridines and heteroatom-containing carbene compounds, and more preferred are trialkyl phosphines and N-hetero-cyclic carbene compounds.

However, depending on the combination of the above-mentioned ligands, all ligands could not coordinate with the metal center owing to steric factors and/or electronic factors, and as a result, some coordination positions may be vacant sites. For example, L¹, L² and L³ include the following combinations. L¹: a heteroatom-containing carbene compound, L²: a phosphine, L³: vacant (vacant coordination site). L¹: a heteroatom-containing carbene compound, L²: a pyridine, L³: a pyridine.

In the formula (11-A), Z¹¹ and Z¹² are each independently a ligand that has a negative charge when dissociated from the metal center (anionic ligand). Concretely, there are mentioned a halogen atom, a hydrogen atom, a substituted diketonate group, a substituted cyclopentadienyl group, an alkyl group having a carbon number of from 1 to 20, an aryl group having a carbon number of from 5 to 20, a substituted alkoxy group having a carbon number of from 1 to 20, a substituted aryloxy group having a carbon number of from 5 to 20, a substituted carboxylate group having a carbon number of from 1 to 20, a substituted arylcarboxylate group having a carbon number of from 6 to 20, a substituted alkylthiolate group having a carbon number of from 1 to 20, a substituted arylthiolate group having a carbon number of from 6 to 20, a nitrate group, and the like. Above all, preferred is a halogen atom, and more preferred is a chlorine atom.

In the formula (11-A), A¹ and A² are the same as A¹ and A² in the formula (11), respectively.

From 2 to 6 of L¹, L², L³, Z¹¹, Z¹² , A¹, and A² may bond to each other to form a polydentate ligand.

The above-mentioned catalyst is generally referred to as "ruthenium-carbene complex", and, for example, ruthenium-carbene complexes described in Vougioukalakis, G. C. et al., Chem. Rev., 2010, 110, 1746-1787 can be used. Also for example, ruthenium-carbene complexes commercially available from Aldrich or Umicore are also usable.

Specific examples of the ruthenium-carbene complex include bis(triphenylphosphine)benzylidene ruthenium dichloride, bis(tricyclohexylphosphine)benzylidene ruthenium dichloride, bis(tricyclohexylphosphine)-3-methyl-2-butenylidene ruthenium dichloride, (1,3-diisopropylimidazol-2-ylidene)(tricyclohexylphosphine)benzylidene ruthenium dichloride, (1,3-dicyclohexylimidazol-2-yldene)(tricyclohexylphosphine)benzylidene ruthenium dichloride, (1,3-dimesitylimidazol-2-ylidene)(tricyclohexylphosphine)benzylidene ruthenium dichloride, (1,3-dimesityl-4,5-dihydroimidazol-2-ylidene)(tricyclohexylphosphine)benzylidene ruthenium dichloride, [1,3-bis(2,6-diisopropylphenyl)-4,5-dihydroimidazol-2-ylidene](tricyclohexylphosphine)benzylidene ruthenium dichloride, [1,3-bis(2-methylphenyl)-4,5-dihydroimidazol-2-ylidene](tricyclohexylphosphine)benzylidene ruthenium dichloride, [1,3-dicyclohexyl-4,5-dihydroimidazol-2-ylidene](tricyclohexylphosphine)benzylidene ruthenium dichloride, bis(tricyclohexylphosphine)ethoxymethylidene ruthenium dichloride, (1,3-dimesityl-4,5-dihydroimidazol-2-ylidene)(tricyclohexylphosphine)ethoxymethylidene ruthenium dichloride, (1,3-dimesityl-4,5-dihydroimidazol-2-ylidene)[bis(3-bromopyridine)]benzylidene ruthenium dichloride, (1,3-dimesityl-4,5-dihydroimidazol-2-ylidene)(2-isopropoxyphenylmethylidene) ruthenium dichloride, (1,3-dimesityl-4,5-dihydroimidazol-2-ylidene)[(tricyclohexylphosphoranyl)methylidene] dichlororuthenium tetrafluoroborate, UmicoreM2, UmicoreM51, UmicoreM52, UrilicoreM71SIMes, UmicoreM71SIPr, UmicoreM73SIMes, UmicoreM73SIPr, and the like. Especially preferred are (1,3-dimesityl-4,5-dihydroimidazol-2-ylidene)(tricyclohexylphosphine)benzylidene ruthenium dichloride, (1,3-dimesityl-4,5-dihydroimidazol-2-ylidene)(2-isopropoxyphenylmethylidene) ruthenium dichloride, (1,3-dimesityl-4,5-dihydroimidazol-2-ylidene)[(tricyclohexylphosphoranyl)methylidene] dichlororuthenium tetrafluoroborate, UmicoreM51, UmicoreM52, UmicoreM71SIMes, UmicoreM71SIPr, UmicoreM73SIMes, and UmicoreM73SIPr. Of the above-mentioned complexes, the names starting from "Umicore" are trade names of the products by Umicore.

The above-mentioned ruthenium-carbene complexes may be used either singly or used in combination of two or more kinds thereof. Further if desired, these may be used as immobilized by a carrier such as silica gel, alumina, polymer or the like.

In the case where M in the compound (11) is molybdenum or tungsten, the compound (11) can be represented by the following formula (11-B) or formula (11-C). The compound (11) may be ones to which a coordination solvent (e.g., tetrahydrofuran, ethylene glycol dimethyl ether, and the like) further coordinates.

In the case where the metal of the metal catalyst is molybdenum or tungsten, it is preferable that the ligand [L] of the metal catalyst should include an imide ligand (R¹-N=M), and examples of R¹ include an alkyl group and an aryl group. Also as the ligand [L] of the metal catalyst, a ligand including two coordinating oxygen atoms is preferable. The term "a ligand including two coordinating oxygen atoms" means both cases, that is, the case where a ligand having two or more oxygen atoms coordinates by two of the oxygen atoms thereof and the case where two monodentate ligands each having an oxygen atom coordinate (these monodentate ligands may be the same or different).

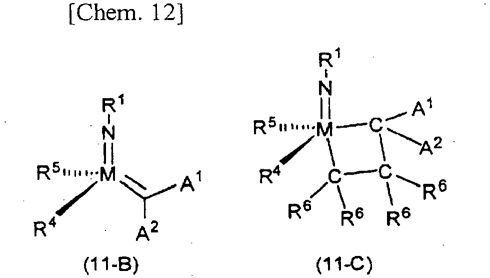

The ligand [L] in the formula (11) is represented by =NR¹, -R⁴, and -R⁵ in formula the (11-B). The position of the =NR¹, -R⁴, and -R⁵ is not limited, and may be replaced with each other in the formula (11-B). M is molybdenum or tungsten. Examples of R¹ include an alkyl group and an aryl group. Examples of R⁴ and R⁵ include a halogen atom, an alkyl group, an aryl group, an alkoxy group, an aryloxy group, a sulfonate group, an amino group (e.g., an alkylamino group, η¹-pyrrolido, and η⁵-pyrrolido). R⁴ and R⁵ may be linked to each other to be a bidentate ligand.

The formula (11-C) is a compound in which an olefin (C₂(R⁶)₄) has added through cycloaddition ([2+2] cycloaddition) to the metal-carbon double bond moiety of a compound represented by the formula (11-B) to form a metallacyclobutane ring. The four R⁶'s respectively are monovalent functional groups which may be the same or different, and examples thereof include a hydrogen atom, a halogen atom, an aryl group, an alkoxy group, an aryloxy group, and an amino group. A compound represented by the formula (11-C) is considered to be equivalent to a compound represented by the formula (11-B).

In formula (11-B) and formula (11-C), A¹ and A² are respectively the same as the A¹ and A² in the formula (11).

The above-mentioned catalyst is generally referred to as a "molybdenum-carbene complex" or "tungsten-carbene complex", and for example, the molybdenum-carbene complexes or tungsten-carbene complexes described in Grela, K. (Ed), Olefin Metathesis: Theory and Practise, Wiley, 2014 can be used. Also for example, molybdenum-carbene complexes or tungsten-carbene complexes commercially available from Aldrich Co., Strem Inc., or XiMo AG.

The above-mentioned molybdenum-carbene complexes or tungsten-carbene complexes may be used either singly or in combination of two or more kinds thereof. Further if desired, these may be used as immobilized by a carrier such as silica gel, alumina, polymer or the like.

Specific examples of the compound (11-B) are shown below. Me means a methyl group, i-Pr means an isopropyl group, t-Bu means a tertiary butyl group, and Ph means a phenyl group.

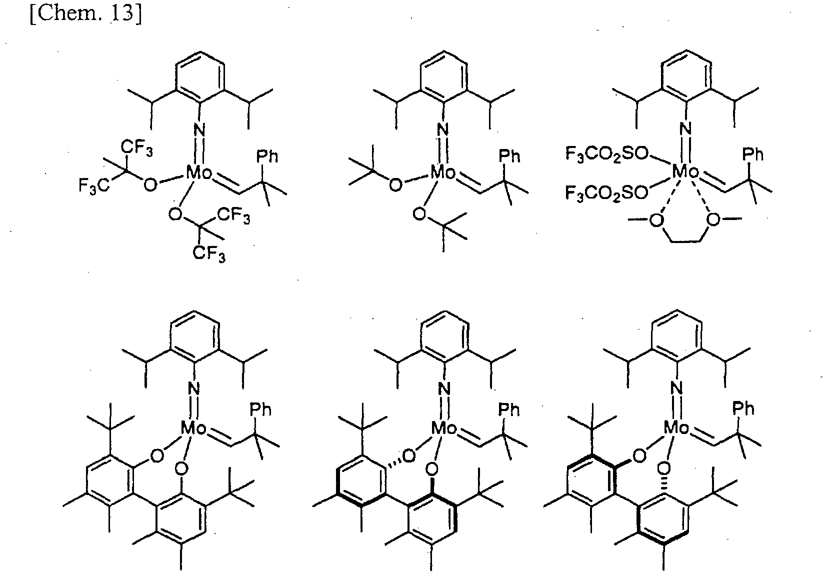

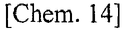

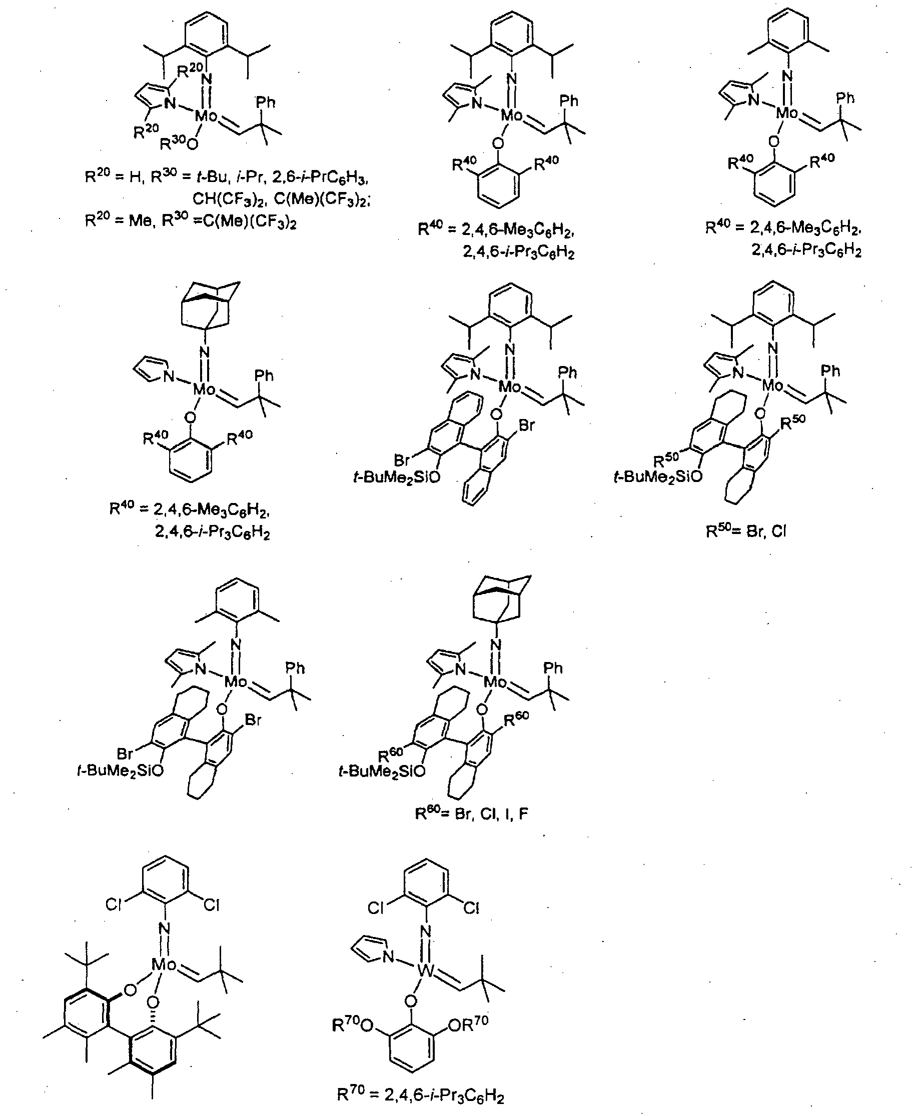

Specific examples of the compound (11-C) include the following compound.

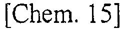

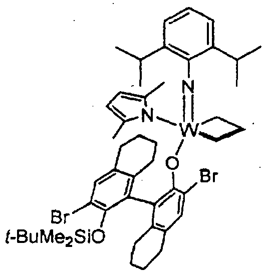

### <Monomer>

In the polymer production according to the invention, a fluorine-containing cycloolefin compound represented by the following the formula (41) or the formula (42) is used as a monomer.

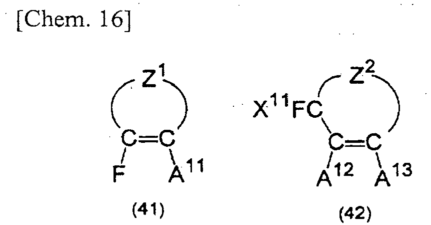

The compound (41) and compound (42) are each a cycloolefin compound containing a fluorine atom. In the compound (41), a fluorine atom directly bonds to the carbon atom constituting a carbon-carbon double bond (C=C). In the compound (42), a fluorine atom bonds to a carbon atom forming a ring and locating adjacent to a carbon-carbon double bond.

In the formulae (41) and (42), Z¹ is an alkylene group having a carbon number of from 2 to 30, a cycloalkylene group having a carbon number of from 4 to 30, an arylene group having a carbon number of from 5 to 30, an alkylene group containing a heteroatom and having a carbon number of from 2 to 30, a cycloalkylene group containing a heteroatom and having a carbon number of from 3 to 30, or an arylene group containing a heteroatom and having a carbon number of from 4 to 30, each of which may have an substituent.

Z² is an alkylene group having a carbon number of from 1 to 29, a cycloalkylene group having a carbon number of from 3 to 29, an arylene group having a carbon number of from 4 to 29, an alkylene group containing a heteroatom and having a carbon number of from 1 to 29, a cycloalkylene group containing a heteroatom and having a carbon number of from 2 to 29, or an arylene group containing a heteroatom and having a carbon number of from 3 to 29, each of which may have a substituent.

A¹¹ is a group selected from the group consisting of the following group (i), group (ii), group (iii), and group (iv).

A¹² and A¹³ are each independently a group selected from the group consisting of the following group (i), group (iia), group (iii), and group (iv).

X¹¹ is a group selected from the group consisting of the following group (i), group (ii), group (v), and group (vi).
Group (i): a hydrogen atom.
Group (ii): a halogen atom.
Group (iia): a chlorine atom, a bromine atom, or an iodine atom.
Group (iii): a monovalent hydrocarbon group having a carbon number of from 1 to 20.
Group (iv): a monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom.
Group (v): a group selected from the group consisting of an alkyl group having a carbon number of from 1 to 12, an alkoxy group having a carbon number of from 1 to 12, an aryl group having a carbon number of from 5 to 20, an aryloxy group having a carbon number of from 5 to 20, a (per)halogenated alkyl group having a carbon number of from 1 to 12, a (per)halogenated alkoxy group having a carbon number of from 1 to 12, a (per)halogenated aryl group having a carbon number of from 5 to 20, and a (per)halogenated aryloxy group having a carbon number of from 5 to 20.
Group (vi): the group (v) which contains one or more atoms selected from the group consisting of an oxygen atom, a nitrogen atom, a sulfur atom, a phosphorus atom, and a silicon atom.

The group (v) is excluded from the group (vi).

A¹¹ in the compound (41) is a group selected from the group consisting of the following group (i), group (ii), group (iii), and group (iv). That is, A¹¹ is a hydrogen atom, a halogen atom, a monovalent hydrocarbon group having a carbon number of from 1 to 20, or a monovalent hydrocarbon group having a carbon number of from 1 to 20 and further containing one or more atoms selected from the group consisting of a halogen atom, an oxygen atom, a nitrogen atom, a sulfur atom, a phosphorous atom, and a silicon atom.

A¹² and A¹³ in the compound (42) are each independently a group selected from the group consisting of the following group (i), group (iia), group (iii), and group (iv). That is, A¹² and A¹³ are each independently a hydrogen atom, a chlorine atom, a bromine atom, an iodine atom, a monovalent hydrocarbon group having a carbon number of from 1 to 20, or a monovalent hydrocarbon group having a carbon number of from 1 to 20 and further containing one or more atoms selected from the group consisting of a halogen atom, an oxygen atom, a nitrogen atom, a sulfur atom, a phosphorous atom, and a silicon atom.

Examples of the halogen atom in the compound (41) include a fluorine atom, a chlorine atom, a bromine atom, and an iodine atom. The fluorine atom and the chlorine atom are preferred from the viewpoint of availability.

In the compound (41) and compound (42), the monovalent hydrocarbon groups having a carbon number of from 1 to 20 are preferably an alkyl group having a carbon number of from 1 to 20, an alkoxy group having a carbon number of from 1 to 20, an aryl group having a carbon number of from 5 to 20, or an aryloxy group having a carbon number of from 5 to 20. Especially preferred, from the viewpoint of availability, is a methyl group, an ethyl group, a propyl group, a phenyl group, a methoxy group, an ethoxy group, a propoxy group, an isopropoxy group, a butoxy group, a tert-butoxy group, a (2-ethyl)hexyloxy group, or a dodecyloxy group. The hydrocarbon framework may be either linear or branched, and the group may form a ring as a divalent group which has lost one hydrogen atom thereof.

Preferred examples of the monovalent hydrocarbon group having a carbon number of from 1 to 20 and containing one or more atoms selected from the group consisting of a halogen atom, an oxygen atom, a nitrogen atom, a sulfur atom, a phosphorous atom, and a silicon atom include alkyl groups having a carbon number of from 1 to 20 and containing the atoms, alkoxy groups having a carbon number of from 1 to 20, aryl groups having a carbon number of from 5 to 20 and containing the atoms, and aryloxy groups having a carbon number of from 5 to 20. In these preferred groups, a halogen atom may bond to at least a part of the carbon atoms. That is, the monovalent hydrocarbon group may be, for example, a (per)fluoroalkyl group or a (per)fluoroalkoxy group. These preferred groups each may have an etheric oxygen atom between a carbon atom and a carbon atom. Furthermore, these preferred groups each may further have a substituent having an oxygen atom, a nitrogen atom, a sulfur atom, a phosphorus atom, or a silicon atom. Examples of the substituent include an amino group, a nitrile group, a carboxyl group, an ester group (an acyloxy group or an alkoxycarbonyl group), a thioalkyl group, and a silyl group.

From the viewpoint of availability, it is especially preferable that A¹¹ to A¹³ should be each independently a hydrogen atom, a phenyl group, a methoxy group, an ethoxy group, a propoxy group, an isopropoxy group, a butoxy group, a tert-butoxy group, a (2-ethyl)hexyloxy group, a dodecyloxy group, an acetyl group, a trifluoromethyl group, a pentafluoroethyl group, a heptafluoropropyl group, a perfluorobutyl group, a perfluorohexyl group, or a perfluorooctyl group. Of the compound (41) or compound (42), a compound having a heteroatom in the vinyl position (a compound where an atom except for a carbon atom or a hydrogen atom exists adjacent to a carbon atom constituting a carbon-carbon bond of the cycloolefin) is thought to have an effect of stabilizing an intermediate generated during the reaction and to thereby render the ring-opening metathesis polymerization apt to proceed. Consequently, the compound (41) or compound (42) preferably is a compound having a heteroatom in the vinyl position. The heteroatom preferably exsisting adjacent to a carbon atom constituting the carbon-carbon double bond of the cycloolefin is preferably an oxygen atom, a nitrogen atom, a sulfur atom, a halogen atom, a phosphorus atom, or a silicon atom, more preferably is an oxygen atom, a nitrogen atom, or a halogen atom, and especially preferably is an oxygen atom or a nitrogen atom.

There is no particular limitation on the number of substituents on the double bond in the compound (41) or compound (42). However, an unsubstituted olefin and a mono-substituted olefin are preferred since these olefins have high reactivity. There are also no particular limitations on the geometrical isomerism on the double bond. However, a geometrical isomer having a larger ring strain is preferred since the isomer has high reactivity.

Furthermore, it is preferable that the compound (41) or compound (42) should be a three-membered to nine-membered ring compound since such compound has high reactivity. More preferred is a three-membered to five-membered ring compound. Of the carbon atoms constituting the ring, a carbon atom other than the carbon atoms constituting the carbon-carbon double bond may be replaced with a heteroatom. The compound may have a plurality of unsaturated bonds in the ring.

Specifically, preferred basic ring frameworks include cyclobutene, cyclopentene, 2,3-dihydrofuran, and 1,3-dioxole. These basic frameworks may have the substituents shown above, and all the hydrogen atoms may be replaced with fluorine atoms.

Specific examples of the compound (41) include the following compounds.

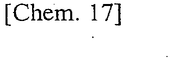

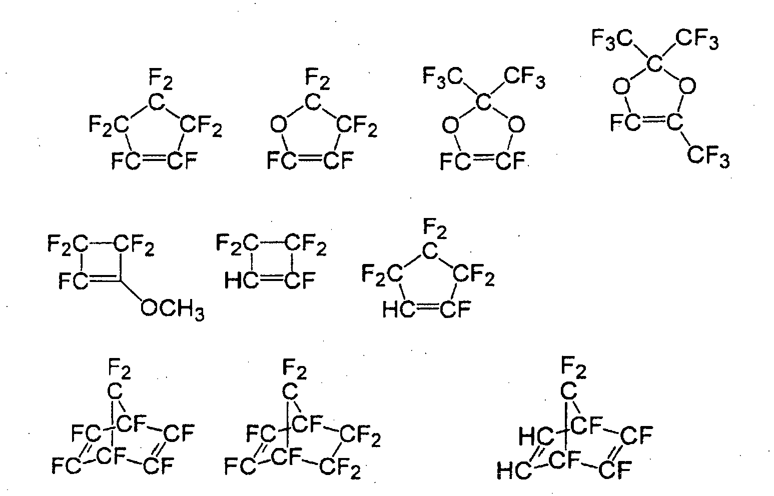

Specific examples of the compound (42) include the following compounds.

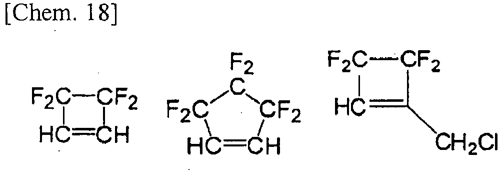

### <Fluorine-containing Polymer>

Through the ring-opening metathesis polymerization according to the present invention, in the case where the compound (41) is used as a monomer, a fluorine-containing polymer having repeating units represented by the following formula (61) is obtained, in the case where the compound (42) is used as a monomer, a fluorine-containing polymer having repeating units represented by the following formula (62) is obtained, and in the case where two or more kinds of fluorine-containing cycloolefin compounds represented by at least one of the formula (41) and formula (42) are used as monomers, a fluorine-containing copolymer is obtained, respectively.

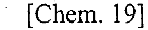

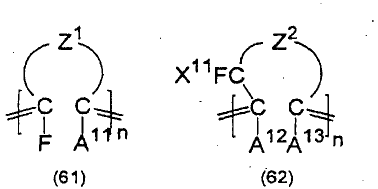

The symbols in the formulae have the same meanings as those in <Monomer> given above, and preferred groups are also the same. Symbol n is a positive integer which indicates the number of repeating units.

Preferred examples of the basic frameworks of homopolymers obtained as the polymer (61) or polymer (62) through the ring-opening metathesis polymerization according to the present invention are poly(cyclobutene), poly(cyclopentene), poly(2,3-dihydrofuran), and poly(1,3-dioxole) from the viewpoint of availability. More preferred are poly(cyclobutene), poly(cyclopentene), and poly(1,3-dioxole).

Preferred examples of the homopolymers include the following compounds.

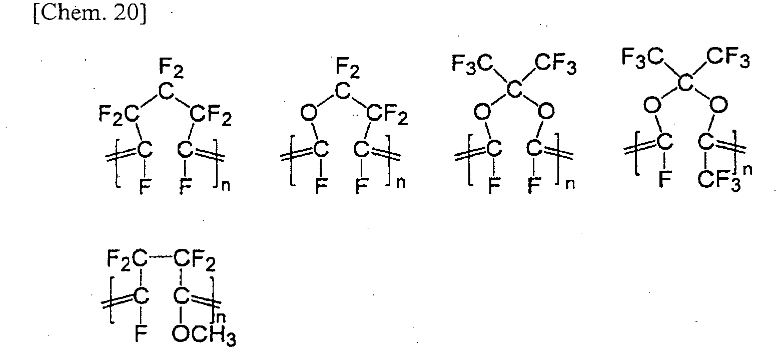

In the case where two or more kinds of monomers differing in structure are subjected to ring-opening metathesis polymerization as starting materials, a copolymer is obtained. For example, an alternating copolymer, a block copolymer, or a random copolymer can be synthesized as the copolymer, and a desired copolymer can be obtained depending on the rate of charge of the starting-material monomer and polymerization conditions.

It is also possible to use a fluorine-containing cycloolefin compound represented by at least one of the formula (41) and formula (42) and a cycloolefin compound containing no fluorine atom as monomers to conduct copolymerization, thereby producing a fluorine-containing polymer. In this case, a fluorine-containing polymer having a fluorine-containing polymer segment containing a fluorine atom in repeating units and a polymer segment containing no fluorine atom in repeating units can be obtained. Preferred as a cycloolefin compound containing no fluorine atom is a norbornene derivative.

The molecular weight of the polymer is preferably 1,000 to 1,000,000 from the viewpoint of mechanical property and physical property. The molecular weight is weight-average molecular weight / number-average molecular weight, and is determined by using GPC under the condition of a polymer solution.

In the case where the polymer is a homopolymer, the number of repeating units represented by n in the formula is preferably 2 to 10,000 from the viewpoint of mechanical property and physical property, and is more preferably 5 to 6,500, even more preferably 5 to 3,000. In the case where the polymer is a copolymer, the total number of plural repeating units is preferably 2 to 10,000, more preferably 5 to 6,500, even more preferably 5 to 3,000.

The polymer obtained has properties including high heat resistance, low water absorption, high light transmittance (transparency), high chemical durability, high weather resistance, and the like, and further has an excellent balance among these properties. Consequently, the polymer can be utilized in a variety of fields including the fields of electrical/electronic materials, semiconductor materials, optical materials and the like.

### <Production Method>

The present invention relates to a method for producing a fluorine-containing polymer from a fluorine-containing cycloolefin monomer through ring-opening metathesis polymerization, in which, typically, two or more kinds of fluorine-containing cycloolefin compounds which are the same or different in structure are brought into contact with a metal-carbene complex to conduct ring-opening metathesis polymerization and obtain a fluorine-containing cycloolefin polymer.

The fluorine-containing cycloolefin monomer as a starting material is at least one compound represented by the above formula (41) or formula (42). That is, the monomer is a compound (41) in which a fluorine atom directly bonds to at least one of carbon atoms constituting a carbon-carbon double bond and/or a compound (42) in which a fluorine atom bonds to a carbon atom forming a ring and locating adjacent to a carbon-carbon double bond. One kind of a compound of these may be used as a monomer, or plural kinds of compounds of these differing in structure may be used as monomers and these may be suitably determined in accordance with a structure of a desired polymer.

From the viewpoint of increasing the product yield, the fluorine-containing cycloolefins degassed and dried are preferably used as starting materials. The degassing operation is not specifically limited. Freeze-pump-thaw degasification or the like may be carried out. The drying operation is not also specifically limited. In general, it may be carried out by bringing into contact with a molecular sieve or the like. The degassing and drying operation for fluorine-containing cycloolefins as starting materials are generally conducted before they are brought into contact with the metal-carbene complex.

The fluorine-containing cycloolefins as starting materials may contain minor impurities (e.g., peroxides, etc.), and therefore may be purified from the viewpoint of increasing the desired product yield. The purification method is not specifically limited. For example, it may be attained according to the methods described in literature (Armarego, W. L. F. et al., Purification of Laboratory Chemicals (Sixth Edition), 2009, Elsevier).

The fluorine-containing cycloolefin as a starting material is put into into a reactor. In the case of using two or more fluorine-containing cycloolefins as monomers, these cycloolefins may be put into a reactor after they have been previously mixed, or may be put thereinto separately.

In the case of using two or more fluorine-containing cycloolefins as monomers, the molar ratio is not particularly limited. In general, based on one mol of one basis fluorine-containing cycloolefin, the other fluorine-containing cycloolefin is used in an amount of from 0.01 to 100 mol or so, and preferably from 0.1 to 10 mol or so.

The metal-carbene complex may be put into as a reagent or may be generated in the system.

In the case where it is put into as a reagent, a commercially-available metal-carbene complex may be used directly as it is, or a commercially-unavailable metal-carbene complex synthesized from a commercially-available reagent according to a known method may be used.

In the case where it is generated in the system, a metal-carbene complex prepared from a metal complex as a precursor according to a known method may be used in the present invention.

The amount of the metal-carbene complex to be used is not particularly limited. It is used generally from 0.0001 to 1 mol or so, and preferably from 0.001 to 0.2 mol or so, based on one mol of one basis olefin of the olefins as starting materials.

The metal-carbene complex to be used is generally put into the reactor as it is solid, but may be put thereinto after dissolved or suspended in a solvent. The solvent to be used in the case is not specifically limited within a range not having any negative influence on the reaction. An organic solvent, a fluorine-containing organic solvent, an ionic liquid, water and the like may be used either singly or in combination thereof. Of these solvent molecules, a part or all of the hydrogen atoms may be substituted with deuterium atoms.

In the case where the fluorine-containing cycloolefin compound is liquid (including the case where the compound liquefies upon heating), it is preferred not to use solvent. In this case, it is preferable that the metal-carbene complex compound dissolves in the fluorine-containing cycloolefin compound.

As the organic solvent, usable are an aromatic hydrocarbon solvent such as benzene, toluene, o-, m- or p-xylene, mesitylene, or the like; an aliphatic hydrocarbon solvent such as hexane, cyclohexane or the like; a halogen-containing solvent such as dichloromethane, chloroform, 1,2-dichloroethane, chlorobenzene, o-dichlorobenzene, or the like; and an ether solvent such as tetrahydrofuran (THF), dioxane, diethyl ether, glyme, diglyme, or the like; and the like. As the fluorine-containing organic solvent, for example, usable are hexafluorobenzene, m-bis(trifluoromethyl)benzene, p-bis(trifluoromethyl)benzene, α,α,α-trifluoromethylbenzene, dichloropentafluoropropan, and the like. As the ionic liquid, for example, usable are various pyridinium salts, various imidazolium salts and the like. Of the above-mentioned solvents, benzene, toluene, o-, m-, and p-xylenes, mesitylene, dichloromethane, chloroform, chlorobenzene, o-dichlorobenzene, diethyl ether, dioxane, THF, hexafluorobenzene, m-bis(trifluoromethyl)benzene, p-bis(trifluoromethyl)benzene, α,α,α-trifluoromethylbenzene, and mixtures thereof are preferred from the viewpoint of the solubility therein of the metal-carbene complex, or the like..

From the viewpoint of increasing the product yield, the solvent degassed and dried is preferably used. The degassing operation is not specifically limited. Freeze-pump-thaw degasification or the like may be carried out. The drying operation is not also specifically limited. In general, it may be brought into contact with a molecular sieve or the like. The degassing and drying operation is generally conducted before it is brought into contact with the metal-carbene complex.

The atmosphere in which the fluorine-containing cycloolefins are brought into contact with the metal-carbene complex is not particularly limited. From the viewpoint of prolonging the catalyst life, inert gas atmosphere is preferred. In particular, a nitrogen or argon atmosphere is preferred. However, in the case where cycloolefins which are gaseous under the reaction conditions are used as starting materials, the gaseous atmosphere of these can be employed.

The phase in which the fluorine-containing cycloolefins are brought into contact with the metal-carbene complex is not particularly limited. From the viewpoint of reaction rate, a liquid phase is usually employed. In the case where the fluorine-containing cycloolefins as starting materials are gaseous under the reaction conditions, it is difficult to carry out in a liquid phase, and therefore may be carried out in a gaseous-liquid two-phase system. For the reaction in a liquid phase, a solvent can be used. As the solvent, use can be made of the same solvent as that used for dissolving or suspending the metal-carbene complex. In the case where the fluorine-containing cycloolefins to be used as starting materials include one which is liquid under the reaction conditions, the reaction can be carried out without any solvent.

The container in which the fluorine-containing cycloolefins are brought into contact with the metal-carbene complex is not particularly limited within a range not having any negative influence on the reaction. For example, use can be made of metal containers, glass containers and the like. In ring-opening metathesis polymerization according to the present invention, a fluorine-containing cycloolefin that are gaseous under the reaction condition may be processed, and therefore preferred are airtightly-closable pressure-proof containers.

The temperature at which fluorine-containing olefins and the metal-carbene complex are brought into contact with each other is not specifically limited. In general, it may be carried out in a range of from -100 to 200° C, and from the viewpoint of the reaction rate, it is preferably from 0 to 150° C. As the case may be, the reaction could not start at low temperatures, and the complex would rapidly decompose at high temperatures, and consequently, the lower limit and the upper limit of the temperature range must be defined case by case. In general, the reaction may be carried out at a temperature not higher than the boiling point of the solvent used.

The time for which fluorine-containing olefins and the metal-carbene complex are brought into contact with each other is not specifically limited. In general, the reaction is carried out in a range of from 1 minute to 48 hours.

The pressure under which fluorine-containing olefins and the metal-carbene complex are brought into contact with each other is not specifically limited. The reaction may be carried out under increased pressure, under ordinary pressure or under reduced pressure. In general, it is from 0.001 to 10 MPa or so, and preferably from 0.01 to 1 MPa or so.

A polymer having a desired molecular weight can be obtained by suitably regulating the rate of charge of the monomer and the reaction conditions described above, such as the reaction temperature, the reaction time, and the reaction pressure.

In the contact of fluorine-containing olefins with the metal-carbene complex, an inorganic salt, an organic compound, a metal complex or the like may be made to exist in the system within a range not having any negative influence on the reaction. Also within a range not having any negative influence on the reaction, the mixture of olefins and the metal-carbene complex may be stirred. In stirring method in this case, usable is a mechanical stirrer, a magnetic stirrer or the like.

After the fluorine-containing cycloolefins are brought into contact with the metal-carbene complex to complete the polymerization reaction, the desired polymer may be isolated according to a known method. Examples of the isolation method include distillation, column chromatography, recycling preparative HPLC, and the like. If desired, these may be employed either singly or in combination of plural kinds thereof.

The desired product obtained by this reaction can be identified according to a known method that is the same as the method for ordinary polymeric compounds. For example, there are mentioned ¹H-, ¹⁹F-, or ¹³C-NMR, GPC, static light scattering, SIMS, GC-MS, and the like. If desired, these may be employed either singly or in combination of plural kinds thereof.

By using two or more monomers to produce a copolymer, more various properties than in homopolymers can be imparted.

In the case where the polymeric compound obtained is a copolymer, the ratio between the two or more unit structures constituting the copolymer depends on the rate of charge of the monomer. Usually, when the number of repeating units derived from the fluorine-containing cycloolefin serving as a reference is taken as 1, the number of repeating units derived from other fluorine-containing cycloolefins is about 0.01 to 100 or so, preferably 0.1 to 10 or so.

### Examples

The present invention is explained below in detail with reference to Examples, but the present invention is not limited to these.

### <Commercial Reagents>

In the Examples, as for the catalyst, commercial products were used in the reaction directly as they are, unless otherwise specifically indicated. As for the solvents (m-xylene-d₁₀ and o-dichlorobenzene-d₄), commercial products were previously degassed by freeze-pump-thaw cycles, then dried with Molecular Sieve 4A, and used in the reaction.

### <Evaluation Method>

The structure of the compound synthesized in the Examples was identified through measurement of ¹H-NMR and ¹⁹F-NMR spectroscopy using a nuclear magnetic resonance spectroscope (JNM-AL300) manufactured by JEOL Ltd.

### <Example 1>

### Ring-opening metathesis polymerization of perfluorocyclopentene with Grubbs' second-generation catalyst

In a nitrogen atmosphere, Grubbs' second-generation catalyst (10 mol%, 0.01 mmol), perfluorocyclopentene (0.1 mmol), and m-xylene-d₁₀ (0.6 mL) were weighed and put into an NMR tube. The NMR tube was heated at 140 °C, and the reaction was conducted at that temperature for 1 hour. Dodecyl vinyl ether was added thereto to terminate the reaction. Thereafter, NMR was measured to confirm that the desired reaction had proceeded.

The series of the reaction is shown below. In the formulae, n is a positive integer which indicates a number of the repeating units.

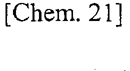

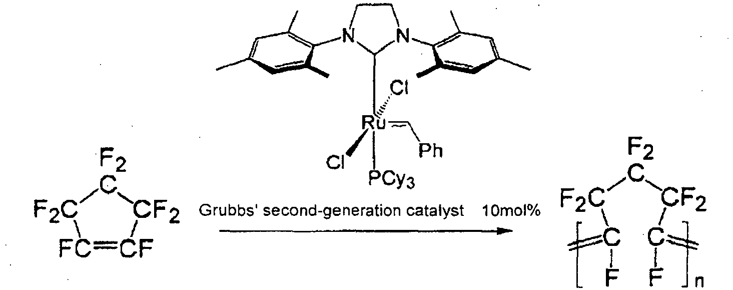

### <Example 2>

### Ring-opening metathesis polymerization of 1,3,3,4,4-pentafluoro-2-methoxycyclobutene with Grubbs' second-generation catalyst

In a nitrogen atmosphere, Grubbs' second-generation catalyst (10 mol%, 0.01 mmol), 1,3,3,4,4-pentafluoro-2-methoxycyclobutene (0.1 mmol), and m-xylene-d₁₀ (0.6 mL) were weighed and put into an NMR tube. The NMR tube was heated at 140 °C, and the reaction was conducted at that temperature for 1 hour. Dodecyl vinyl ether was added thereto to terminate the reaction. Thereafter, NMR was measured to confirm that the desired reaction had proceeded.

The series of the reaction is shown below. In the formulae, n is a positive integer which indicates the repeating units. 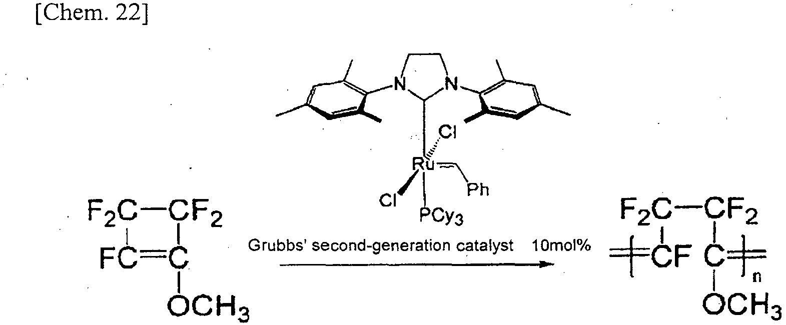 Grubbs' second-generation catalyst 10 mol%

### <Example 3>

### Ring-opening metathesis polymerization of 3,3,4,4-tetrafluorocyclobutene with Grubbs' second-generation catalyst

In a nitrogen atmosphere, Grubbs' second-generation catalyst (10 mol%, 0.01 mmol), 3,3,4,4-tetrafluorocyclobutene (0.1 mmol), and o-dichlorobenzene-d₄ (0.6 mL) are weighed and put into an NMR tube. The NMR tube is heated at 180 °C, and the reaction is conducted at that temperature for 1 hour. After cooling, ethyl vinyl ether is added thereto to terminate the reaction. Thereafter, NMR is measured to confirm that the desired reaction has proceeded

The series of the reaction is shown below. In the formulae, n is a positive integer which indicates the repeating units. 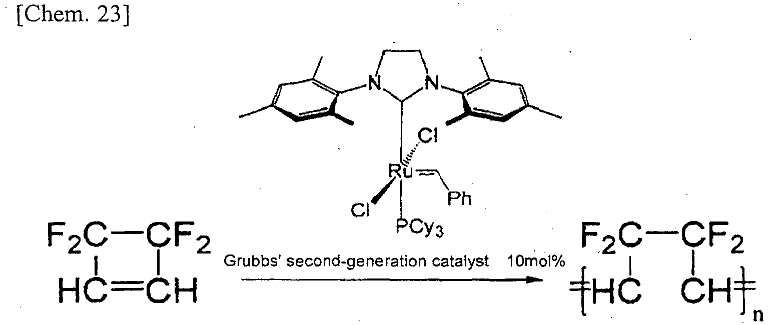 Grubbs' second-generation catalyst 10 mol%

### <Example 4> Ring-opening metathesis polymerization of 3,3,4,4,5,5-hexafluorocyclopentene with Grubbs' second-generation catalyst

Grubbs' second-generation catalyst (10 mol%; 0.01 mmol), 3,3,4,4,5,5-hexafluorocyclopentene (0.1 mmol), and o-dichlorobenzene-d₄ (0.6 mL) are weighed and put into an NMR tube in a nitrogen atmosphere. The NMR tube is heated at 180°C, and the reaction is conducted at that temperature for 1 hour. After cooling, ethyl vinyl ether is added thereto to terminate the reaction. Thereafter, NMR is measured to confirm that the desired reaction has proceeded.

The series of the reaction is shown below. In the formulae, n is a positive integer which indicates the repeating units. 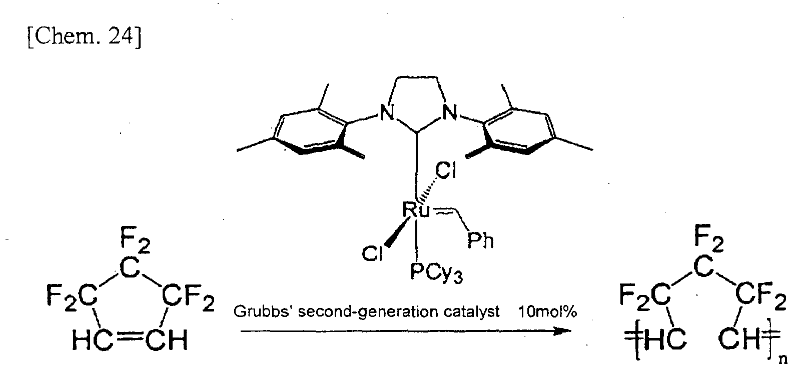 Grubbs' second-generation catalyst 10 mol%

### <Example 5>

### Ring-opening metathesis polymerization of perfluoronorbornadiene with Grubbs' second-generation catalyst

In a nitrogen atmosphere Grubbs' second-generation catalyst (10 mol%, 0.01 mmol), perfluoronorbornadiene (0.1 mmol), and o-dichlorobenzene-d₄ (0.6 mL) are weighed and put into an NMR tube. The NMR tube is heated at 180 °C, and the reaction is conducted at that temperature for 1 hour. After cooling, ethyl vinyl ether is added thereto to terminate the reaction. Thereafter, NMR is measured to confirm that the desired reaction has proceeded.

### <Example 6>

### Ring-opening metathesis polymerization of 1,2,3,4,7,7-hexafluoronorbornadiene with Grubbs' second-generation catalyst

In a nitrogen atmosphere, Grubbs' second-generation catalyst (10 mol%, 0.01 mmol), 1,2,3,4,7,7-hexafluoronorbornadiene (0.1 mmol), and o-dichlorobenzene-d₄ (0.6 mL) are weighed and put into an NMR tube. The NMR tube is heated at 180 °C, and the reaction is conducted at that temperature for 1 hour. After cooling, ethyl vinyl ether is added thereto to terminate the reaction. Thereafter, NMR is measured to confirm that the desired reaction has proceeded.

### <Example 7>

### Ring-opening metathesis polymerization of perfluoro-2,2-dimethyl-1,3-dioxole with Grubbs' second-generation catalyst

In a nitrogen atmosphere, Grubbs' second-generation catalyst (10 mol%, 0.01 mmol), perfluoro-2,2-dimethyl-1,3-dioxole (0.1 mmol), and o-dichlorobenzene-d₄ (0.6 mL) are weighed and put into an NMR tube. The NMR tube is heated at 180 °C, and the reaction is conducted at that temperature for 1 hour. After cooling, ethyl vinyl ether is added thereto to terminate the reaction. Thereafter, NMR is measured to confirm that the desired reaction has proceeded. In the formulae, n is a positive integer which indicates the repeating units. 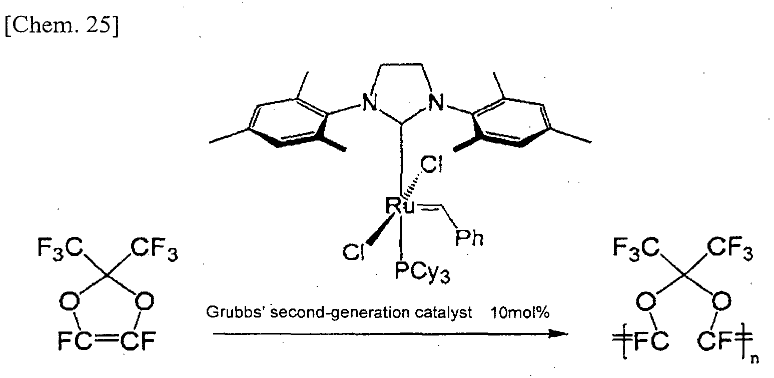 Grubbs' second-generation catalyst 10 mol%

### <Example 8>

### Ring opening metathesis copolymerization of perfluoronorbornene and norbornene with Grubbs' second-generation catalyst

In a nitrogen atmosphere, Grubbs' second-generation catalyst (10 mol%, 0.01 mmol), perfluoronorbornene (0.05 mmol), norbornene (0.05 mmol), and o-dichlorobenzene-d₄ (0.6 mL) are weighed and put into an NMR tube. The NMR tube is heated at 180°C, and the reaction is conducted at that temperature for 1 hour. After cooling, ethyl vinyl ether is added thereto to terminate the reaction. Thereafter, NMR is measured to confirm that the desired reaction has proceeded.

The series of the reaction is shown below. In the formulae, m and n are each independently a positive integer which indicates the repeating units. 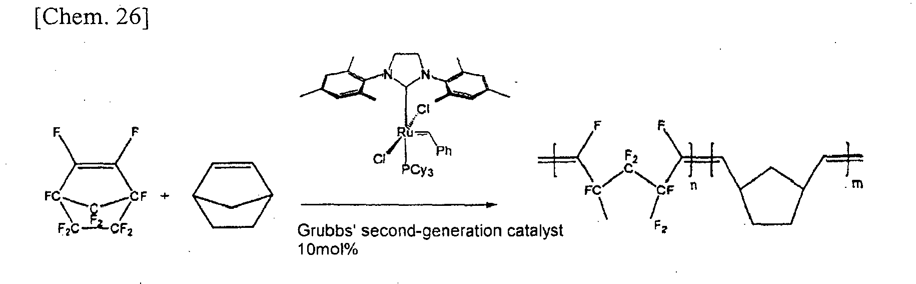 Grubbs' second-generation catalyst 10 mol%

### <Example 9>

### Ring opening metathesis copolymerization of perfluoro-2,2-dimethyl-1,3-dioxole and norbornene with Grubbs' second-generation catalyst

In a nitrogen atmosphere, Grubbs' second-generation catalyst (10 mol%, 0.01 mmol), perfluoro-2,2-dimethyl-1,3-dioxole (0.05 mmol), norbornene (0.05 mmol), and o-dichlorobenzene-d₄ (0.6 mL) are weighed and put into an NMR tube. The NMR tube is heated at 180°C, and the reaction is conducted at that temperature for 1 hour. After cooling, ethyl vinyl ether is added thereto to terminate the reaction. Thereafter, NMR is measured to confirm that the desired reaction has proceeded.

The series of the reaction is shown below. In the formulae, m and n are each independently a positive integer which indicates the repeating units. 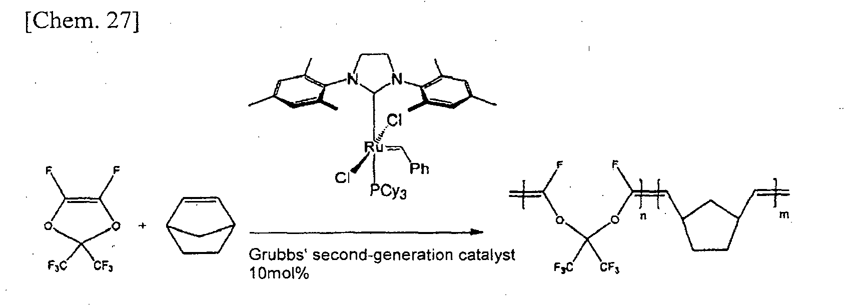 Grubbs' second-generation catalyst 10 mol%

### <Examples 10 to 13>

### Ring-opening metathesis polymerization of perfluorocyclopentene with molybdenum catalyst

The Grubbs' second-generation catalyst in Example 1 is replaced with the known molybdenum catalysts D to G represented by the following formulae, and reaction is conducted in the same manner to obtain the same reaction product as in Example 1.
[Table 1]

**Table 1**

| Example | Catalyst | Structure | Example | Catalyst | Structure |
|---|---|---|---|---|---|
| 10 | D | 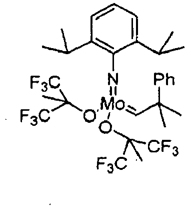 | 12 | F | 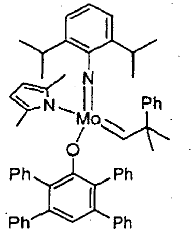 |
| 11 | E | 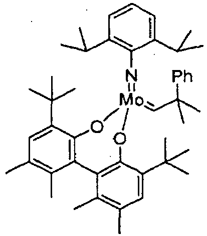 | 13 | G | 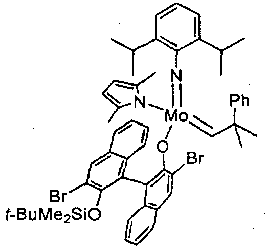 |

### <Example 14>

### Ring-opening metathesis polymerization of perfluorocyclopentene with tungsten catalyst

The Grubbs' second-generation catalyst in Example 1 is replaced with the known tungsten catalyst H represented by the following formula, and reaction is conducted in the same manner to obtain the same reaction product as in Example 1.
[Table 2]

**Table 2**

| Example | Catalyst | Structure |
|---|---|---|
| 14 | H | 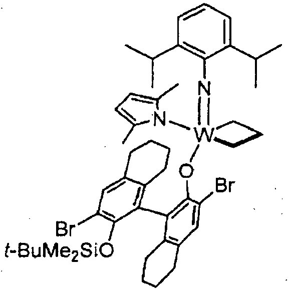 |

### <Examples 15 to 18>

### Ring-opening metathesis polymerization of perfluoro-2,2-dimethyl-1,3-dioxole with molybdenum catalyst

The Grubbs' second-generation catalyst in Example 7 is replaced with the molybdenum catalysts D to G shown above, and reaction is conducted in the same manner to obtain the same reaction product as in Example 7.

### <Example 19>

### Ring-opening metathesis polymerization of perfluoro-2,2-dimethyl-1,3-dioxole with tungsten catalyst

The Grubbs' second-generation catalyst in Example 7 is replaced with the tungsten catalyst H shown above, and reaction is conducted in the same manner to obtain the same reaction product as in Example 7.

While the present invention has been described in detail and with reference to specific embodiments thereof, it will be apparent to one skilled in the art that various changes and modifications can be made therein without departing from the spirit and scope thereof. This application is based on a Japanese patent application filed on February 9, 2015 (Application No. 2015-023412), the contents thereof being incorporated herein by reference.

### Industrial Applicability

According to the present invention, a fluorine-containing polymer having a desired structure and a desired molecular weight can be easily and efficiently obtained through the ring-opening metathesis polymerization of fluorine-containing cycloolefins. This fluorine-containing polymer can be utilized as a functional polymer in a variety of fields including the fields of electrical/electronic materials, semiconductor materials, and optical materials.

## Claims

1. A method for producing a fluorine-containing polymer comprising subjecting at least one kind of fluorine-containing cycloolefin compound selected from the group consisting of a fluorine-containing cycloolefin compound represented by the following formula (41) and a fluorine-containing cycloolefin compound represented by the following formula (42) to ring-opening metathesis polymerization in the presence of a metal-carbene complex compound (10) having an olefin metathesis reaction activity: 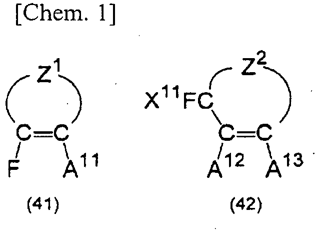 The symbols in the above formulae have the following meanings:
Z¹ is an alkylene group having a carbon number of from 2 to 30, a cycloalkylene group having a carbon number of from 4 to 30, an arylene group having a carbon number of from 5 to 30, an alkylene group containing a heteroatom and having a carbon number of from 2 to 30, a cycloalkylene group containing a heteroatom and having a carbon number of from 3 to 30, or an arylene group containing a heteroatom and having a carbon number of from 4 to 30, each of which may have a substituent;
Z² is an alkylene group having a carbon number of from 1 to 29, a cycloalkylene group having a carbon number of from 3 to 29, an arylene group having a carbon number of from 4 to 29, an alkylene group containing a heteroatom and having a carbon number of from 1 to 29, a cycloalkylene group containing a heteroatom and having a carbon number of from 2 to 29, or an arylene group containing a heteroatom and having a carbon number of from 3 to 29, each of which may have a substituent;
A¹¹ is a group selected from the group consisting of the following group (i), group (ii), group (iii), and group (iv);
A¹² and A¹³ are each independently a group selected from the group consisting of the following group (i), group (iia), group (iii), and group (iv);
X¹¹ is a group selected from the group consisting of the following group (i), group (ii), group (v), and group (vi);
Group (i): a hydrogen atom;
Group (ii): a halogen atom;
Group (iia): a chlorine atom, a bromine atom, or an iodine atom;
Group (iii): a monovalent hydrocarbon group having a carbon number of from 1 to 20;
Group (iv): a monovalent hydrocarbon group having a carbon number of from 1 to 20 and containing one or more atoms selected from the group consisting of a halogen atom, an oxygen atom, a nitrogen atom, a sulfur atom, a phosphorus atom, and a silicon atom;
Group (v): a group selected from the group consisting of an alkyl group having a carbon number of from 1 to 12, an alkoxy group having a carbon number of from 1 to 12, an aryl group having a carbon number of from 5 to 20, an aryloxy group having a carbon number of from 5 to 20, a (per)halogenated alkyl group having a carbon number of from 1 to 12, a (per)halogenated alkoxy group having a carbon number of from 1 to 12, a (per)halogenated aryl group having a carbon number of from 5 to 20, and a (per)halogenated aryloxy group having a carbon number of from 5 to 20;
Group (vi): the group (v) further containing one or more atoms selected from the group consisting of an oxygen atom, a nitrogen atom, a sulfur atom, a phosphorus atom, and a silicon atom.

2. The production method according to claim 1, wherein a metal in the metal-carbene complex compound (10) is ruthenium, molybdenum, or tungsten.

3. The production method according to claim 1 or 2, wherein a metal in the metal-carbene complex compound (10) is ruthenium.

4. The production method according to claim 1 or 2, wherein a metal in the metal-carbene complex compound (10) is molybdenum or tungsten and the metal-carbene complex compound has an imide ligand and a ligand including two coordinating oxygen atoms, as ligands [L].

5. The production method according to any one of claims 1 to 4, wherein the fluorine-containing cycloolefin compound represented by the formula (41) is at least one kind of a fluorine-containing cycloolefin compound selected from the group consisting of compounds represented by the following formulae.

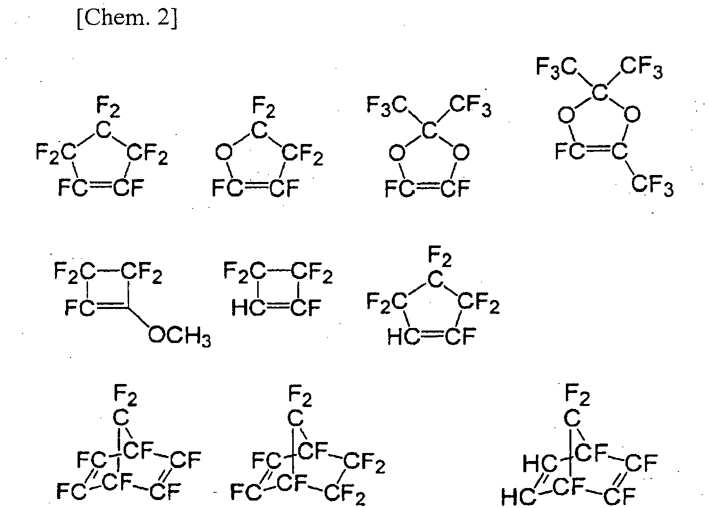

6. The production method according to any one of claims 1 to 5, wherein the fluorine-containing cycloolefin compound represented by the formula (42) is at least one kind of a fluorine-containing cycloolefin compound selected from compounds represented by the following formulae.

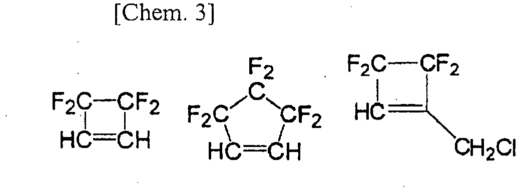

7. The production method according to any one of claims 1 to 6, wherein a temperature in the polymerization is from 0 to 150°C.

8. The production method according to any one of claims 1 to 7, wherein no solvent is used.
